# EUROPEAN PATENT APPLICATION

(11) **EP 4 576 407 A1**
(43) Date of publication of application: **25.06.2025**
(21) Application number: 24823671.3
(22) Date of filing: 11.06.2024
(51) Int. Cl.: H01M 50/583, H01M 50/538, H01M 50/152, H01M 50/342, H01M 50/213, H01M 50/249, H01M 50/559

(54) **BATTERY CELL, AND BATTERY PACK AND VEHICLE COMPRISING SAME**

(30) Priority: 15.06.2023 KR 20230077099
(71) Applicant: LG Energy Solution, Ltd., Seoul 07335 (KR)
(72) Inventor: LEE, Dong-Hwan, Daejeon 34122 (KR); PARK, Kwang-Cheol, Daejeon 34122 (KR); LEE, Myung-An, Daejeon 34122 (KR)
(74) Representative: Goddar, Heinz J.
(86) International application number: PCT/KR2024/007984
(87) International publication number: WO 2024/258153

(57) **Abstract**

Disclosed is a battery cell, which includes an electrode assembly; a housing configured to accommodate the electrode assembly through an open portion provided at one side and having a closed portion formed at a side opposite to the open portion; a current collector disposed between the electrode assembly and the closed portion and electrically coupled to the electrode assembly; a terminal electrically coupled to the electrode assembly through the closed portion; and a CID interposed between the terminal and the current collector and coupled to the current collector, the CID being coupled to the current collector with a coupling force greater than the coupling force with the terminal.

## Description

### TECHNICAL FIELD

The present disclosure relates to a battery cell, and a battery pack and a vehicle including the same.

The present application claims priority to Korean Patent Application No. 10-2023-0077099 filed on June 15, 2023 in the Republic of Korea, the disclosures of which are incorporated herein by reference.

### BACKGROUND ART

Fuse devices currently used in secondary batteries include PTC thermistors (positive temperature coefficient thermistor) and TCO (thermal cut-out). However, PTC or TCO have the disadvantage that their resistance increases as the operation is repeated, thereby increasing the overall resistance in the circuit.

Also, the devices mentioned above are all operated by heat generation due to overcurrent. In other words, the devices mentioned above correspond to devices that operate to block the flow of current only when overcurrent is generated in the circuit current path due to overcharging or the like and thus the temperature rises resultantly.

Therefore, the devices mentioned above may operate and block overcurrent only after safety has already threatened due to heat generation, and is not able to block overcurrent immediately when a cause for temperature rise occurs. Even if the internal pressure increases due to an abnormal temperature rise inside the secondary battery, safety problems such as ignition or explosion may occur if overcurrent is not blocked at the appropriate time.

In addition, since the devices mentioned above simply operate depending on temperature, these devices it is difficult to use these devices in high-output secondary batteries, such as secondary batteries for battery packs used in vehicles. In other words, a battery pack for a vehicle requires a high c-rate and accordingly generates a large amount of heat. However, devices such as PTC thermistors (positive temperature coefficient thermistor), TCO (thermal cut-out), and thermal fuses have the problem that they may operate prematurely when placed in such a high temperature environment.

Therefore, there is needed a secondary battery with a structure that may be used even in environments where high currents flow, and may block current in advance when events that may cause a temperature rise (for example, an increase in the internal pressure of a secondary battery) occurs before the temperature rises to a level that may cause a safety problem.

### DISCLOSURE

### Technical Problem

The present disclosure is designed to solve the problems of the related art, and therefore the present disclosure is directed to providing a battery cell with a structure that may quickly block current when an abnormal situation occurs in the battery cell, and a battery pack and a vehicle including the same.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery cell, comprising: an electrode assembly; a housing configured to accommodate the electrode assembly through an open portion provided at one side and having a closed portion formed at a side opposite to the open portion; a current collector disposed between the electrode assembly and the closed portion and electrically coupled to the electrode assembly; a terminal electrically coupled to the electrode assembly through the closed portion; and a CID interposed between the terminal and the current collector and coupled to the current collector, the CID being coupled to the current collector with a coupling force greater than the coupling force with the terminal.

An area of a coupling surface between the CID and the current collector may be larger than an area of a coupling surface between the CID and the terminal.

A coupling surface formed at a lower end of the terminal may be provided at a position corresponding to a winding center hole of the electrode assembly.

The CID may be coupled with the current collector at an inner side and an outer side of a region corresponding to the winding center hole.

The current collector may include a first coupling portion electrically coupled to the electrode assembly; and a second coupling portion located to be spaced apart from the first coupling portion along a radial direction of the electrode assembly and provided at a position corresponding to a winding center hole of the electrode assembly.

The CID may be coupled with both the first coupling portion and the second coupling portion.

The CID may be configured to cover both the first coupling portion and the second coupling portion along the radial direction of the electrode assembly.

The battery cell may include a CID gasket interposed between the closed portion and the current collector and configured to maintain a separated state when the terminal and the CID are separated from each other due to an increase in pressure inside the housing.

The CID gasket may be configured to have an elastic restoring force in an expansion direction between the closed portion and the current collector.

The CID gasket may be configured to expand as the temperature inside the housing increases.

The CID gasket may be at least partially interposed between the CID and the closed portion.

The battery cell may include a battery cap configured to cover the open portion.

The battery cap may have a venting portion configured to be weak compared to the surrounding region.

A coupling portion between the terminal and the CID may be configured to rupture at a pressure lower than a venting pressure of the venting portion.

In another aspect of the present disclosure, there is also provided a battery pack, comprising: the battery cell according to an embodiment of the present disclosure.

In another aspect of the present disclosure, there is also provided a vehicle, comprising the battery pack according to an embodiment of the present disclosure.

### Advantageous Effects

According to one aspect of the present disclosure, when an abnormal situation occurs in the battery cell, the current may be quickly blocked, thereby ensuring safety in the use of secondary batteries.

According to another aspect of the present disclosure, it is possible to prevent electrical connection from being made again after current is blocked since an abnormal situation occurs in the battery cell.

According to still another aspect of the present disclosure, current may be blocked in advance before venting of the battery cell occurs, thereby further improving the safety of secondary batteries in use.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the structure of an upper portion of a battery cell according to an embodiment of the present disclosure.
FIG. 2 is a diagram for illustrating a rupture of a coupling portion between components as an internal pressure of the battery cell shown in FIG. 1 increases.
FIG. 3 is a diagram for illustrating a phenomenon in which a coupling portion of a terminal and a current collector moves together without being ruptured as the terminal rises when a CID of the present disclosure is omitted in the battery cell shown in FIGS. 1 and 2.
FIG. 4 is a diagram for illustrating a phenomenon in which a coupling portion of the terminal and the CID ruptures as the terminal rises when the CID of the present disclosure is applied to the battery cell shown in FIGS. 1 and 2.
FIG. 5 is a diagram showing a battery cell to which a current collector of a different type from the current collector shown in FIG. 1 is applied.
FIG. 6 is a diagram for illustrating the rupture of the coupling portion between components as the internal pressure of the battery cell shown in FIG. 5 increases.
FIGS. 7 and 8 are diagrams showing an exemplary form of the current collector applied to the battery cell shown in FIGS. 5 and 6.
FIG. 9 is a diagram for illustrating a phenomenon in which, when the CID of the present disclosure is omitted in the battery cell shown in FIGS. 5 and 6, the coupling portion of the terminal and the current collector move together without being ruptured as the terminal rises.
FIG. 10 is diagram for illustrating a phenomenon in which, when the CID of the present disclosure is coupled only to a second coupling portion of the current collector in the battery cell shown in FIGS. 5 and 6, the coupling portion of the terminal and the CID moves together without being ruptured as the terminal rises.
FIG. 11 is diagram for illustrating a phenomenon in which, when the CID of the present disclosure is coupled with both the first coupling portion and the second coupling portion of the current collector in the battery cell shown in FIGS. 5 and 6, the coupling portion of the terminal and the CID ruptures as the terminal rises.
FIG. 12 is a diagram showing a battery cell to which a CID gasket is additionally applied in the battery cell shown in FIG. 5.
FIG. 13 is a diagram for illustrating the rupture of the coupling portion between components as the internal pressure of the battery cell shown in FIG. 12 increases.
FIGS. 14 and 15 are diagrams showing a battery cell having a structure in which the CID gasket is disposed at a different position compared to the battery cell shown in FIG. 12.
FIG. 16 is a drawing showing the appearance of the battery cell according to the present disclosure.
FIG. 17 is a diagram showing the overall internal structure of the battery cell shown in FIG. 16.
FIG. 18 is a partial cross-sectional view showing the structure of a lower portion of the battery cell according to the present disclosure.
FIG. 19 is a diagram showing a battery pack according to an embodiment of the present disclosure.
FIG. 20 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

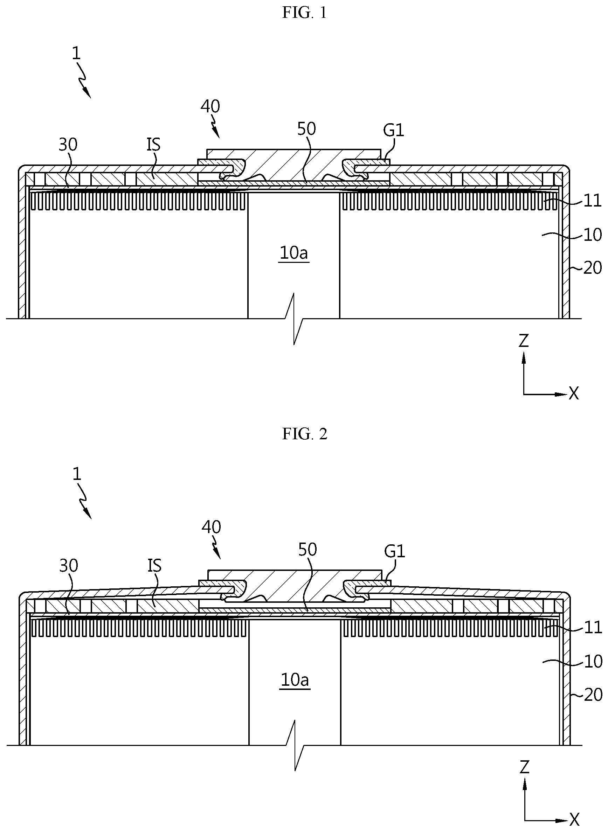

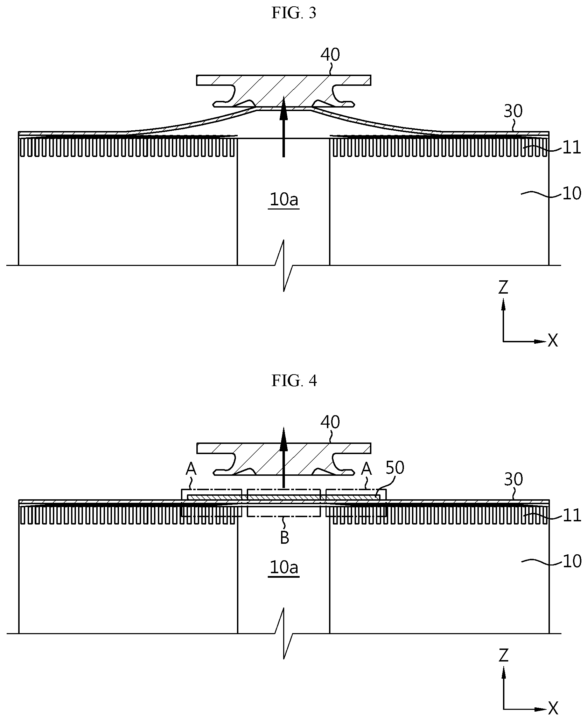

A battery cell 1 according to an embodiment of the present disclosure will be described with reference to FIGS. 1 to 4. FIG. 1 is a perspective view showing the structure of an upper portion of a battery cell according to an embodiment of the present disclosure, and FIG. 2 is a diagram for illustrating a rupture of a coupling portion between components as an internal pressure of the battery cell shown in FIG. 1 increases. FIG. 3 is a diagram for illustrating a phenomenon in which a coupling portion of a terminal and a current collector moves together without being ruptured as the terminal rises when a CID of the present disclosure is omitted in the battery cell shown in FIGS. 1 and 2, and FIG. 4 is a diagram for illustrating a phenomenon in which a coupling portion of the terminal and the CID ruptures as the terminal rises when the CID of the present disclosure is applied to the battery cell shown in FIGS. 1 and 2.

First, referring to FIG. 1, the battery cell 1 according to an embodiment of the present disclosure may include an electrode assembly 10, a housing 20, a current collector (first current collector) 30, a terminal 40, and a CID (Current Interruption Device) 50.

The electrode assembly 10 may include a first electrode, a second electrode, and a separator interposed between the first electrode and the second electrode. The electrode assembly 10 may be, for example, a jelly roll-type electrode assembly in which a stack including a first electrode, a second electrode, and a separator is wound in one direction. The electrode assembly 10 may have a first uncoated portion 11 at the top end. The first uncoated portion 11 refers to a region of the first electrode that is not coated with electrode active material. The first uncoated portion 11 may be formed at one end of the first electrode and may extend along the winding direction of the electrode assembly 10. The first uncoated portion 11 may extend upward along the height direction of the electrode assembly 10 (a direction parallel to the Z-axis).

The housing 20 may be configured to accommodate the electrode assembly 10 through an open portion provided at one side. The housing 20 may have a closed portion formed at a side opposite to the open portion.

The current collector 30 may be disposed between the electrode assembly 10 and the closed portion of the housing 20. The current collector 30 may be electrically coupled to the electrode assembly 10. For example, one side of the current collector 30 may be coupled with the first uncoated portion 11 provided at the top end of the electrode assembly 10. The current collector 30 and the electrode assembly 10 may be coupled to each other, for example, by laser welding, ultrasonic welding, etc.

Meanwhile, the first uncoated portion 11 may have segments formed by segmenting along the winding direction of the electrode assembly 10, and these segments may be bent toward the core of the electrode assembly 10, for example. The bent segments of the first uncoated portion 11 may overlap each other to form a plurality of layers. When the segments of the first uncoated portion 11 are bent in this way, the current collector 30 may be coupled to the approximately flat surface formed by bending the first uncoated portion 11.

The terminal 40 may be electrically coupled to the electrode assembly 10 through the closed portion of the housing 20. The terminal 40 may, for example, penetrate approximately the center of the closed portion of the housing 20. The terminal 40 may be fixed, for example, by riveting on the inner surface of the closed portion of the housing 20.

The CID 50 may be interposed between the terminal 40 and the current collector 30. The CID 50 may be a plate containing a conductive metal. The first side of the CID 50 may be coupled with the terminal 40, and the second side, which is a side opposite to the first side, may be coupled with the current collector 30. The CID 50 may be coupled with the current collector 30. The CID may be coupled to the current collector with a coupling force greater than the coupling force with the terminal. In other words, the coupling force between the first side of the CID 50 and the terminal 40 may be stronger than the coupling force between the second side of the CID 50 and the current collector 30.

Referring to FIG. 2, since the coupling force between components is formed differently using the CID 50, the coupling portion between the terminal 40 and the CID 50 may be quickly ruptured when the housing 20 expands due to an increase in the internal pressure of the battery cell 1, which may block the flow of current through the terminal 40.

Referring to FIG. 3, unlike the battery cell 1 of the present disclosure, in a battery cell 1 to which the CID 50 is not applied, when the terminal 40 rises due to an increase in the internal pressure, before the coupling portion between the current collector 30 and the terminal 40 is ruptured, the coupling portion between the current collector 30 and the electrode assembly 10 may be partially ruptured first and/or the rupture of the coupling portion between the current collector 30 and the terminal 40 may be delayed as the current collector 30 bends.

The difference in coupling force as described above may be caused, for example, by the difference in coupling surface area. For example, the area of the coupling surface between the CID 50 and the current collector 30 may be larger than the area of the coupling surface between the CID 50 and the terminal 40.

After the CID 50 is welded to the current collector 30 connected to the electrode assembly 10, the combined body including the electrode assembly 10, the current collector 30, and the CID 50 may be pushed through the open portion of the housing 20 so that the CID 50 comes into contact with the bottom of the terminal 40. Next, the current collector 30, the CID 50, and the terminal 40 may be welded by inserting a welding device or irradiating a laser through the winding center hole 10a formed at approximately the center of the electrode assembly 10. At this time, since the welding area between the CID 50 and the terminal 40 is smaller than the welding area between the current collector 30 and the CID 50, the welding region between the terminal 40 and the CID 50 may rupture quickly due to an increase in internal pressure.

The coupling surface formed at the lower end of the terminal 40 may be provided at a position corresponding to the winding center hole 10a of the electrode assembly 10. In this case, the current collector 30 cannot be coupled to the electrode assembly 10 at the position corresponding to the coupling portion of the CID 50 and the terminal 40. Therefore, when the closed portion is bent due to an increase in the internal pressure of the battery cell 1 and the terminal 40 rises accordingly, the current collector 30 may be bent in a region corresponding to the winding center hole 10a. This bending of the current collector 30 may be a cause of disturbing the rupture of the coupling portion between the terminal 40 and the CID 50. If the CID 50 of the present disclosure is applied, the CID 50 may reinforce the rigidity of the current collector 30, and thus the rupture of the coupling portion between the terminal 40 and the CID 50 may occur more quickly.

Referring to FIG. 4 along with FIGS. 1 to 3, the CID 50 may be coupled with the current collector 30 at the inner side (B region) and the outer side (A region) of the region corresponding to the winding center hole 10a. In this case, the bending of the current collector 30 and the CID 50 may be further suppressed, and thus the coupling portion of the terminal 40 and the CID 50 may rupture more quickly.

Meanwhile, referring to FIGS. 1 and 2, the battery cell 1 of the present disclosure may include an insulator IS and/or an insulating gasket G1. The insulator IS may be disposed in the space formed between the closed portion of the housing 20 and the current collector 30. The insulator IS may include an insulating material. The insulator IS may prevent contact between the current collector 30 and the housing 20, which are configured to have different polarities. The insulating gasket G1 may be inserted between the terminal 40 and the housing 20. The insulating gasket G1 may contain an insulating material. The insulating gasket G1 may prevent contact between the terminal 40 and the housing 20, which are configured to have different polarities.

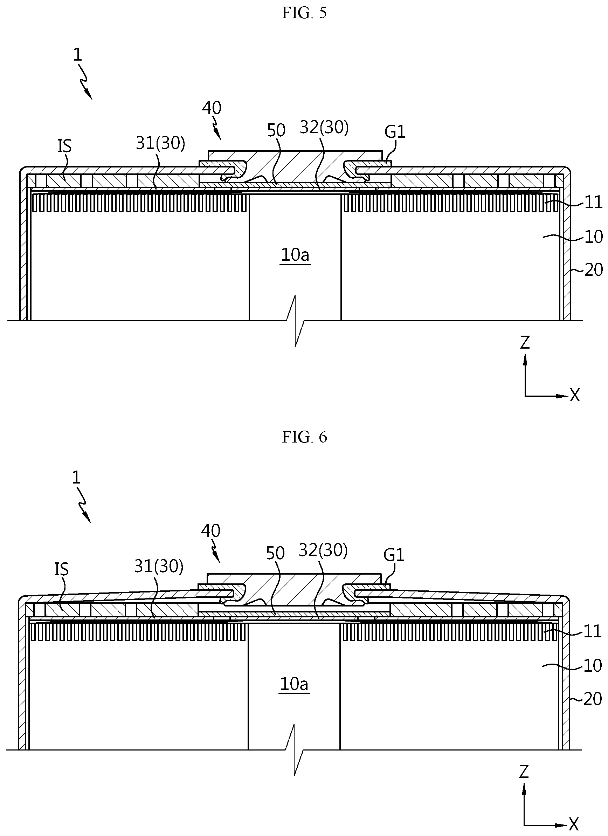

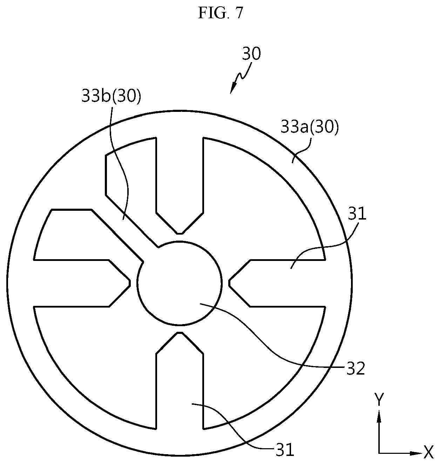

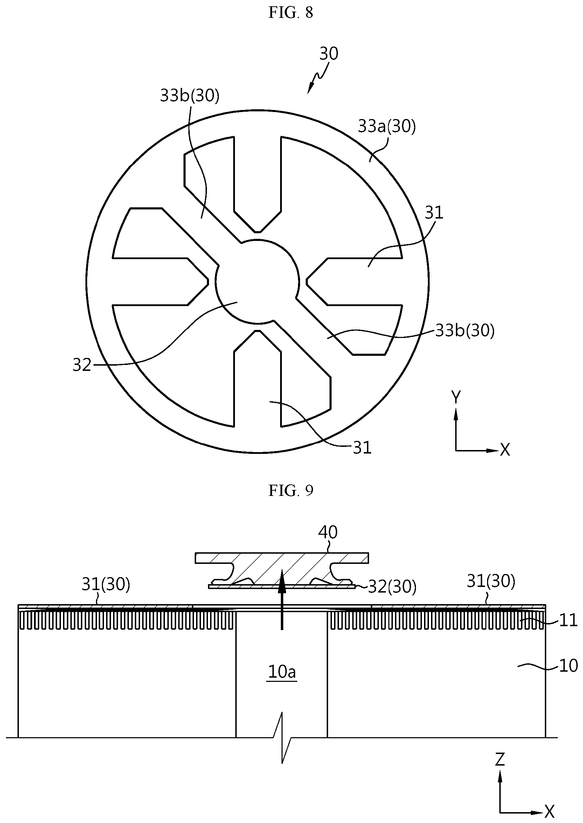

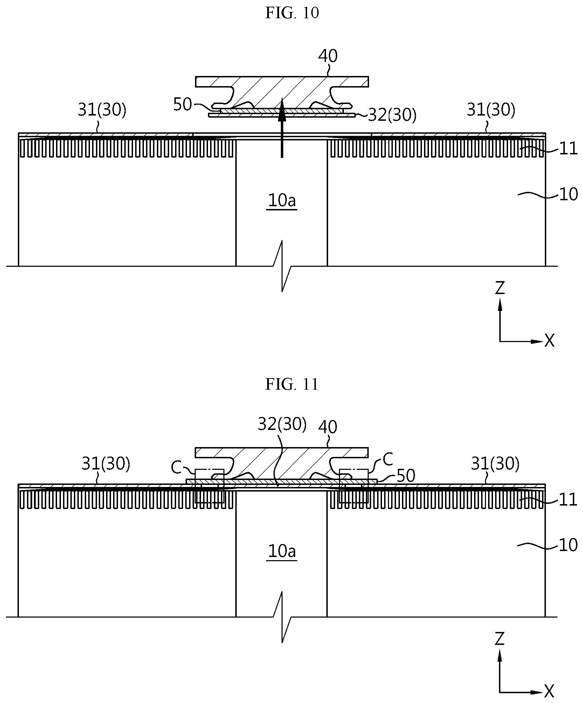

Next, the battery cell 1 having a structure different from that described above will be described with reference to FIGS. 5 to 11. FIG. 5 is a diagram showing a battery cell to which a current collector of a different type from the current collector shown in FIG. 1 is applied, and FIG. 6 is a diagram for illustrating the rupture of the coupling portion between components as the internal pressure of the battery cell shown in FIG. 5 increases. FIGS. 7 and 8 are diagrams showing an exemplary form of the current collector applied to the battery cell shown in FIGS. 5 and 6. FIG. 9 is a diagram for illustrating a phenomenon in which, when the CID of the present disclosure is omitted in the battery cell shown in FIGS. 5 and 6, the coupling portion of the terminal and the current collector move together without being ruptured as the terminal rises. FIG. 10 is diagram for illustrating a phenomenon in which, when the CID of the present disclosure is coupled only to a second coupling portion of the current collector in the battery cell shown in FIGS. 5 and 6, the coupling portion of the terminal and the CID moves together without being ruptured as the terminal rises. FIG. 11 is diagram for illustrating a phenomenon in which, when the CID of the present disclosure is coupled with both the first coupling portion and the second coupling portion of the current collector in the battery cell shown in FIGS. 5 and 6, the coupling portion of the terminal and the CID ruptures as the terminal rises.

First, referring to FIG. 5, the current collector 30 may include a first coupling portion 31 and a second coupling portion 32. The first coupling portion 31 may be electrically coupled to the electrode assembly 10. The first coupling portion 31 may be coupled, for example, with the first uncoated portion 11 of the electrode assembly 10. The second coupling portion 32 may be located to be spaced apart from the first coupling portion 31 along the radial direction of the electrode assembly 10. The second coupling portion 32 may be coupled to the terminal 40 with the CID 50 being interposed therebetween.

According to the structure of the current collector 30 of the present disclosure, the first coupling portion 31 provided for coupling with the electrode assembly 10 and the second coupling portion 32 provided for coupling with the terminal 40 are not directly connected to each other but indirectly connected. Therefore, when an impact is applied to one of the welding portion formed in the first coupling portion 31 and the welding portion formed in the second coupling portion 32, the shock may be prevented from being directly transmitted to the other one. This may reduce the risk of damage to the welding portion due to external shock.

The second coupling portion 32 may be provided at a position corresponding to the winding center hole 10a of the electrode assembly 10. In the drawings of the present disclosure, the second coupling portion 32 is shown to have a larger size to cover the winding center hole 10a, but the present disclosure is not limited thereto. The second coupling portion 32 may have a size substantially identical to or smaller than the winding center hole 10a.

Referring to FIGS. 7 and 8, the current collector 30 may include a connection portion 33 configured to electrically connect the first coupling portion 31 and the second coupling portion 32. The connection portion 33 may include a border portion 33a having an approximately rim shape with an empty center, and a bridge portion 33b for connecting the border portion 33a and the second coupling portion 32. The bridge portion 33b may be provided in one or in plurality. The first coupling portion 31 may extend inward from the border portion 33a. The first coupling portion 31 may be provided in plurality. In this case, the second coupling portion 32 may be arranged to be surrounded by the plurality of first coupling portions 31.

Referring to FIG. 5 again, the CID 50 may be coupled with both the first coupling portion 31 and the second coupling portion 32. In this case, when the internal pressure of the battery cell 1 increases, the welding portion between the terminal 40 and the CID 50 may rupture quickly as shown in FIG. 6, thereby quickly blocking the electrical flow through the terminal 40. In this case, the CID 50 may be configured to cover both the first coupling portion 31 and the second coupling portion 32 along the radial direction of the electrode assembly 10.

Referring to FIG. 9, when the CID 50 is omitted and the second coupling portion 32 of the terminal 40 and the current collector 30 are directly coupled, it may be found that the coupling portion between the terminal 40 and the current collector 30 is not easily ruptured when the terminal 40 rises.

Referring to FIG. 10, when the CID 50 is not coupled to the first coupling portion 31 but coupled only to the second coupling portion 32, it may be found that the coupling portion between the terminal 40 and the current collector 30 is not easily ruptured when the terminal 40 rises. Meanwhile, referring to FIG. 11, when the CID 50 is coupled with both the first coupling portion 31 and the second coupling portion 32, it may be found that the first coupling portion 31 and the second coupling portion 32, which are spaced apart from each other, are structurally connected (see C region in FIG. 11). Therefore, the phenomenon in which the second coupling portion 32 rises together with the rise of the terminal 40 may be suppressed.

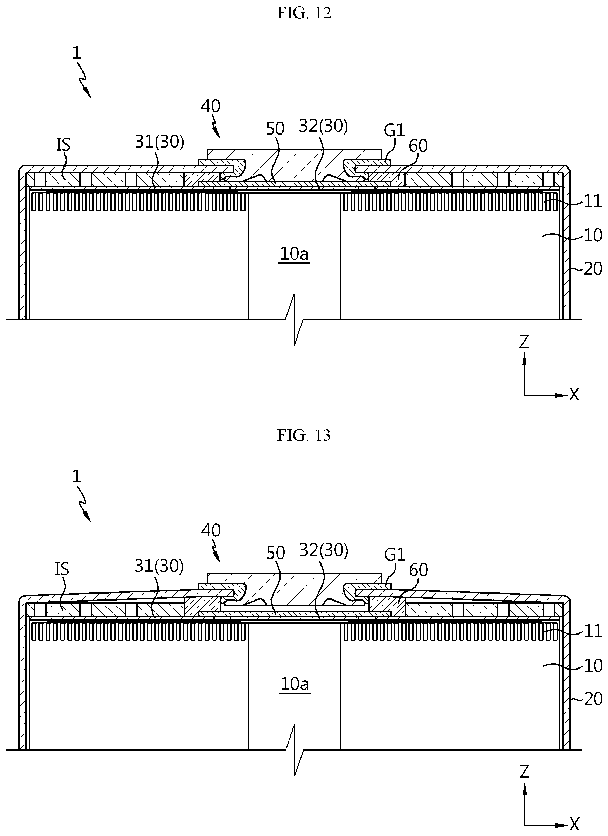

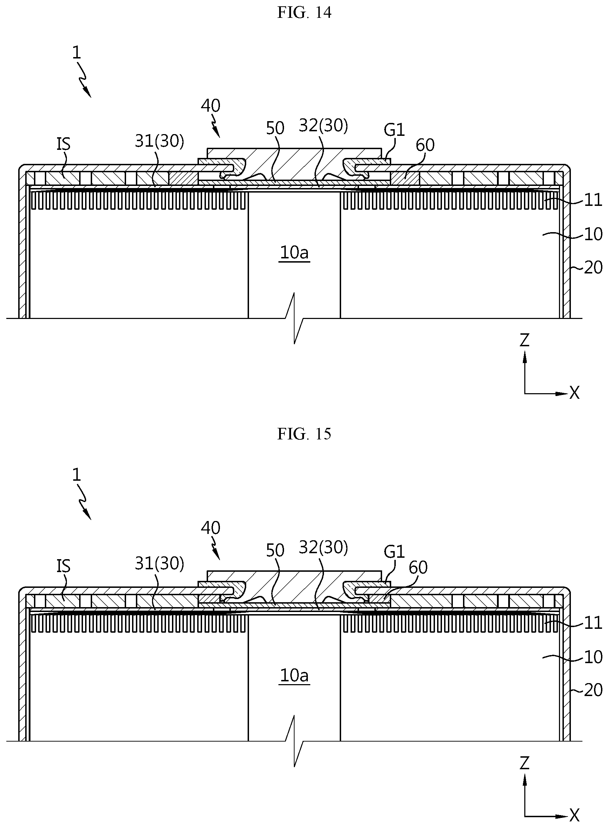

Next, an embodiment in which a CID gasket 60 is applied to the battery cell 1 of the present disclosure will be described with reference to FIGS. 12 and 15. FIG. 12 is a diagram showing a battery cell to which a CID gasket is additionally applied in the battery cell shown in FIG. 5, and FIG. 13 is a diagram for illustrating the rupture of the coupling portion between components as the internal pressure of the battery cell shown in FIG. 12 increases. FIGS. 14 and 15 are diagrams showing a battery cell having a structure in which the CID gasket is disposed at a different position compared to the battery cell shown in FIG. 12.

Referring to FIGS. 12 and 13, the battery cell 1 of the present disclosure may include a CID gasket 60. The CID gasket 60 may include a material with insulating properties. The CID gasket 60 may be interposed between the closed portion of the housing 20 and the current collector 30. The CID gasket 60 may maintain the separated state when the terminal 40 and the CID 50 are separated from each other due to an increase in pressure inside the housing 20. The CID gasket 60 may be configured to have an elastic restoring force in the expansion direction between the closed portion of the housing 20 and the current collector 30. The CID gasket 60 may be interposed between the closed portion and the current collector 30 in a compressed state to have a thickness corresponding to the distance between the closed portion and the current collector 30.

By applying the CID gasket 60, the closed portion of the housing 20, which swells upward due to an increase in internal pressure, may not be restored to its original shape but remain in a deformed state. When the closed portion of the housing 20 deforms to swell upward, the terminal 40 may rise together, and the coupling portion between the terminal 40 and the CID 50 may rupture accordingly. When the CID gasket 60 is applied, the terminal 40 and the CID 50 may be maintained to be spaced apart from each other, and the flow of current through the terminal 40 may be maintained to be blocked.

The CID gasket 60 may be configured to expand as the temperature inside the housing 20 increases. In other words, the CID gasket 60 may contain a material that expands due to heat. For example, the CID gasket 60 may contain a foaming resin. The CID gasket 60 may be configured to expand, for example, at a temperature at which the closed portion of the housing 20 swells upward.

The CID gasket 60 may be arranged to be at least partially interposed between the CID 50 and the closed portion of the housing 20. When the CID gasket 60 is arranged like this, the coupling portion between the current collector 30 and the electrode assembly 10 may be pressurized by the CID gasket 60. Therefore, when the terminal 40 rises, it is possible to prevent the coupling portion between the current collector 30 and the electrode assembly 10 from being damaged first before the coupling portion between the terminal 40 and the CID 50 is damaged. To maximize this effect, the entire region of the CID gasket 60 may be located on the CID 50, as shown in FIG. 15. However, the location where the CID gasket 60 of the present disclosure is disposed is not limited thereto, and the entire region of the CID gasket 60 may be located outside of the CID 50 as shown in FIG. 14.

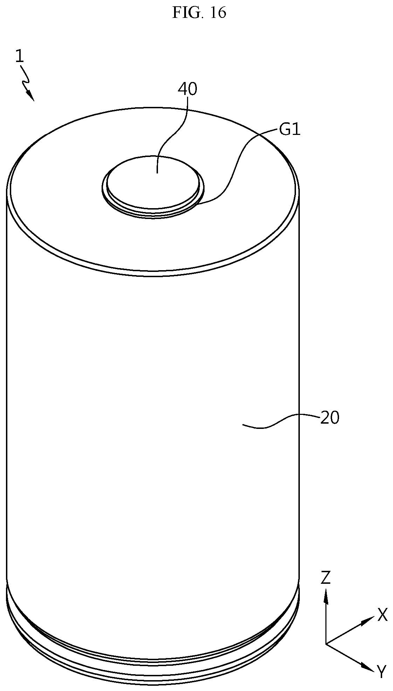

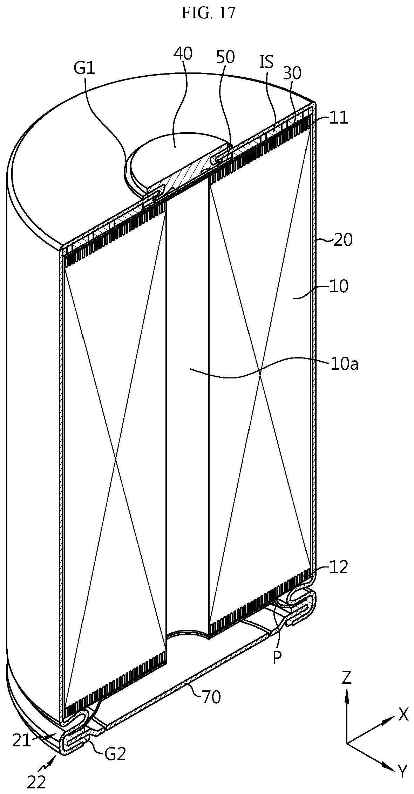

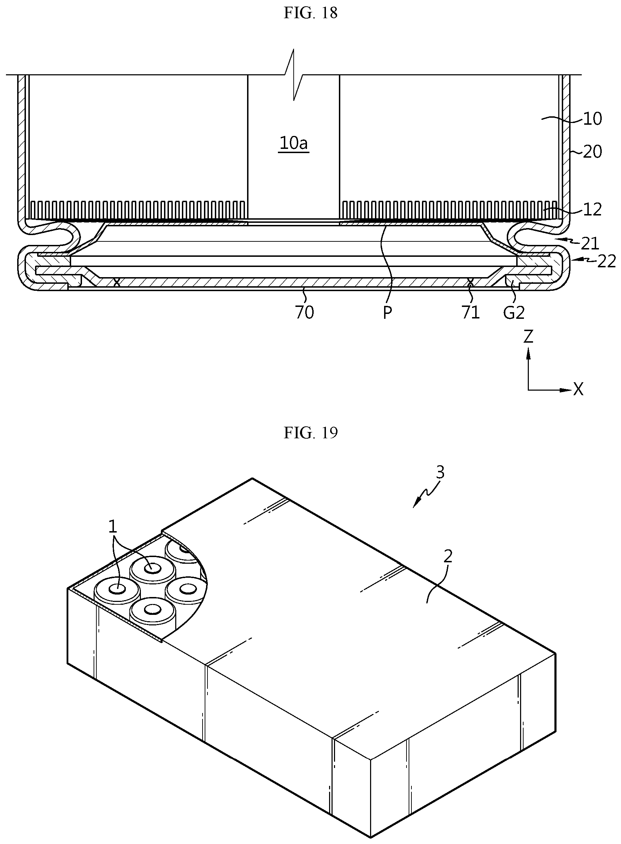

Next, the overall structure of the battery cell 1 of the present disclosure and the structure of the lower portion thereof will be described in more detail with reference to FIGS. 16 to 18. FIG. 16 is a drawing showing the appearance of the battery cell according to the present disclosure, FIG. 17 is a diagram showing the overall internal structure of the battery cell shown in FIG. 16, and FIG. 18 is a partial cross-sectional view showing the structure of a lower portion of the battery cell according to the present disclosure.

Referring to FIGS. 16 to 18, the battery cell 1 of the present disclosure may include a battery cap 70 configured to cover the open portion of the housing 20. The battery cap 70 may have a venting portion 71 configured to be weak compared to the surrounding region. For example, the venting portion 71 may be configured to have a smaller thickness than the surrounding region by notching one side or both sides of the battery cap 70.

If the battery cell 1 of the present disclosure has a venting portion 71 as above, the coupling portion between the terminal 40 and the CID 50 of the present disclosure as described above may be configured to rupture at low pressure than the venting pressure of the venting portion 71, namely the pressure at which the venting portion 71 ruptures. This is to ensure safety in battery use by blocking the flow of current through the terminal 40 before a thermal event caused by venting spreads.

The battery cell 1 of the present disclosure may include a sealing gasket G2 interposed between the battery cap 70 and the inner surface of the housing 20. The sealing gasket G2 may be configured to enhance the sealing properties of the housing 20.

Meanwhile, the battery cell 1 of the present disclosure may be configured such that the closed portion of the terminal 40 and the housing 20 function as a first electrode terminal and a second electrode terminal, respectively. As described above, the terminal 40 may be electrically connected to the first uncoated portion 11 of the electrode assembly 10 through the current collector (first current collector) 30, and thus may have first polarity. The housing 20 may be electrically connected to the second uncoated portion 12 of the electrode assembly 10, and thus may have second polarity.

The housing 20 and the second uncoated portion 12 of the electrode assembly 10 may be electrically connected, for example, through a second current collector P. Like the first uncoated portion 11 described above, the second uncoated portion 12 refers to a region in the second electrode that is not coated with electrode active material. The second uncoated portion 12 may be formed at one end of the second electrode and may extend along the winding direction of the electrode assembly 10. The second uncoated portion 12 may extend downward along the height direction of the electrode assembly 10 (a direction parallel to the Z-axis). The second current collector P may be coupled onto the second uncoated portion 12. The second uncoated portion 12 may have segments similar to the first uncoated portion 11 described above, and the segments may be bent toward the core of the electrode assembly 10. The bent segments of the second uncoated portion 12 may overlap each other to form a plurality of layers. When the segments of the second uncoated portion 12 are bent in this way, the second current collector P may be coupled to the approximately flat surface formed by bending the second uncoated portion 12.

The second current collector P may be coupled onto the inner side of the housing 20. The housing 20 may include a beading portion 21 press-fitted along the outer circumference. The housing 20 may include a crimping portion 22 that is formed to extend and bend from the beading portion 21 to surround the peripheral edge of the battery cap 70. The second current collector P may be interposed between one side of the beading portion 21 and the sealing gasket G2.

Next, a battery pack 3 according to an embodiment of the present disclosure will be described with reference to FIG. 19. FIG. 19 is a diagram showing a battery pack according to an embodiment of the present disclosure.

Referring to FIG. 19 along with FIGS. 17 and 18, the battery pack 3 according to an embodiment of the present disclosure may include the battery cell 1 according to an embodiment of the present disclosure and a pack housing 2 configured to accommodate the battery cell 1. The battery cell 1 may be provided in plurality, and the plurality of battery cells 1 may be electrically connected to each other. As described above, the battery cell 1 of the present disclosure may be configured so that the terminal 40 and the closed portion of the housing 20 may function as a first electrode terminal and a second electrode terminal, respectively (see FIGS. 17 and 18). Therefore, when arranging a plurality of battery cells 1 in the pack housing 2, all battery cells 1 may be arranged so that the terminals 40 face upward, and thus electrical connection may be made at the top of the battery cells 1.

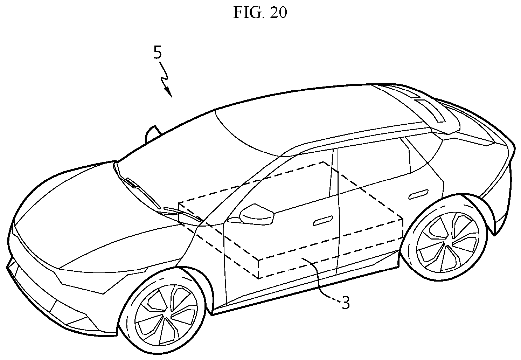

Next, a vehicle 5 according to an embodiment of the present disclosure will be described with reference to FIG. 20. FIG. 20 is a drawing showing a vehicle according to an embodiment of the present disclosure.

Referring to FIG. 20, the vehicle 5 according to an embodiment of the present disclosure may include the battery pack 3 according to an embodiment of the present disclosure. The vehicle 5 may be configured to operate by receiving power from the battery pack 3. The vehicle 5 may be, for example, an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

5: vehicle
3: battery pack
1: battery cell
10: electrode assembly
10a: winding center hole
11: uncoated portion (first uncoated portion)
12: uncoated portion (second uncoated portion)
20: housing
21: beading portion
22: crimping portion
30: current collector (first current collector)
31: first coupling portion
32: second coupling portion
33: connection portion
33a: border portion
33b: bridge portion
IS: insulator
40: terminal
G1: insulating gasket
50: CID
60: CID gasket
70: battery cap
71: venting portion
G2: sealing gasket
P: current collector (second current collector)

## Claims

1. A battery cell, comprising:
an electrode assembly;
a housing configured to accommodate the electrode assembly through an open portion provided at one side and having a closed portion formed at a side opposite to the open portion;
a current collector disposed between the electrode assembly and the closed portion and electrically coupled to the electrode assembly;
a terminal electrically coupled to the electrode assembly through the closed portion; and
a CID interposed between the terminal and the current collector and coupled to the current collector, the CID being coupled to the current collector with a coupling force greater than the coupling force with the terminal.

2. The battery cell according to claim 1,
wherein an area of a coupling surface between the CID and the current collector is larger than an area of a coupling surface between the CID and the terminal.

3. The battery cell according to claim 1,
wherein a coupling surface formed at a lower end of the terminal is provided at a position corresponding to a winding center hole of the electrode assembly.

4. The battery cell according to claim 3,
wherein the CID is coupled with the current collector at an inner side and an outer side of a region corresponding to the winding center hole.

5. The battery cell according to claim 1,
wherein the current collector includes:
a first coupling portion electrically coupled to the electrode assembly; and
a second coupling portion located to be spaced apart from the first coupling portion along a radial direction of the electrode assembly and provided at a position corresponding to a winding center hole of the electrode assembly.

6. The battery cell according to claim 5,
wherein the CID is coupled with both the first coupling portion and the second coupling portion.

7. The battery cell according to claim 6,
wherein the CID is configured to cover both the first coupling portion and the second coupling portion along the radial direction of the electrode assembly.

8. The battery cell according to claim 1,
wherein the battery cell includes a CID gasket interposed between the closed portion and the current collector and configured to maintain a separated state when the closed portion and the current collector are separated from each other due to an increase in pressure inside the housing.

9. The battery cell according to claim 8,
wherein the CID gasket is configured to have an elastic restoring force in an expansion direction between the closed portion and the current collector.

10. The battery cell according to claim 8,
wherein the CID gasket is configured to expand as the temperature inside the housing increases.

11. The battery cell according to claim 8,
wherein the CID gasket is at least partially interposed between the CID and the closed portion.

12. The battery cell according to claim 1,
wherein the battery cell includes a battery cap configured to cover the open portion, and
wherein the battery cap has a venting portion configured to be weak compared to the surrounding region.

13. The battery cell according to claim 12,
wherein a coupling portion between the terminal and the CID is configured to rupture at a pressure lower than a venting pressure of the venting portion.

14. A battery pack, comprising the battery cell according to any one of claims 1 to 13.

15. A vehicle, comprising the battery pack according to claim 14.
